Europäisches Patentamt

European Patent Office

Office européen des brevets

(19)

(11) EP 0 980 152 A1

(12) EUROPEAN PATENT APPLICATION

(43) Date of publication:
16.02.2000 Bulletin 2000/07

(51) Int Cl.⁷: $H04B\ 7/005$, H04B 7/26, H04J 3/06

(21) Application number: 99440219.6

(22) Date of filing: 06.08.1999

(84) Designated Contracting States:
AT BE CH CY DE DK ES FI FR GB GR IE IT LI LU MC NL PT SE
Designated Extension States:
AL LT LV MK RO SI

(30) Priority: 10.08.1998 FR 9810240

(71) Applicant: ALCATEL
75008 Paris (FR)

(72) Inventors:
• Bejjani, Elie
  92210 St. Cloud (FR)

• Bouquier, Jean-François
  75004 Paris (FR)
• de Cacqueray, Benoît
  75017 Paris (FR)

(74) Representative: Scheer, Luc et al
ALCATEL,
Intellectual Property Department,
Postfach 300 929
70449 Stuttgart (DE)

(54) **A time slot including reference symbols used in a CDMA type transmission network**

(57) The invention relates in particular to a time slot for a control frame used in a CDMA type transmission network. The time slot has N symbols, of which P are reference symbols occupying exactly two distinct fields.

FIG. 4

**Description**

The field of the invention is that of transmitting digital data in a code division multiple access (CDMA) type network. More precisely, the present invention relates to transmitting reference symbols in such a network, said reference symbols being transmitted cyclically in time slots of a control frame.

BACKGROUND OF THE INVENTION

The present invention lies in the context of a CDMA communications network in which a plurality of mobile terminals capable of moving at high speed (up to 500 km/h) communicate with a fixed station.

More precisely, the description below relates to the context of a wideband CDMA network (W-CDMA) in which two types of dedicated physical channel are considered: a dedicated physical data channel (DPDCH) and a dedicated physical control channel (DPCCH). The DPDCH is thus a physical channel used for transmitting payload data and the DPCCH is a physical channel used for transmitting control data. The control data includes reference symbols used on reception for estimating the transmission channel (coherent demodulation), power control symbols, and symbols for indicating the current transmission rate in use on the DPDCH, for example.

To transmit over the down link (from the fixed station towards the terminals), the information in the DPDCH and the DPCCH is transmitted, for example, by time multiplexing using QPSK modulation. For transmission over the up link (from the terminals towards the fixed station), the information on the DPDCH and the DPCCH is transmitted in 2-BPSK mode by code distribution.

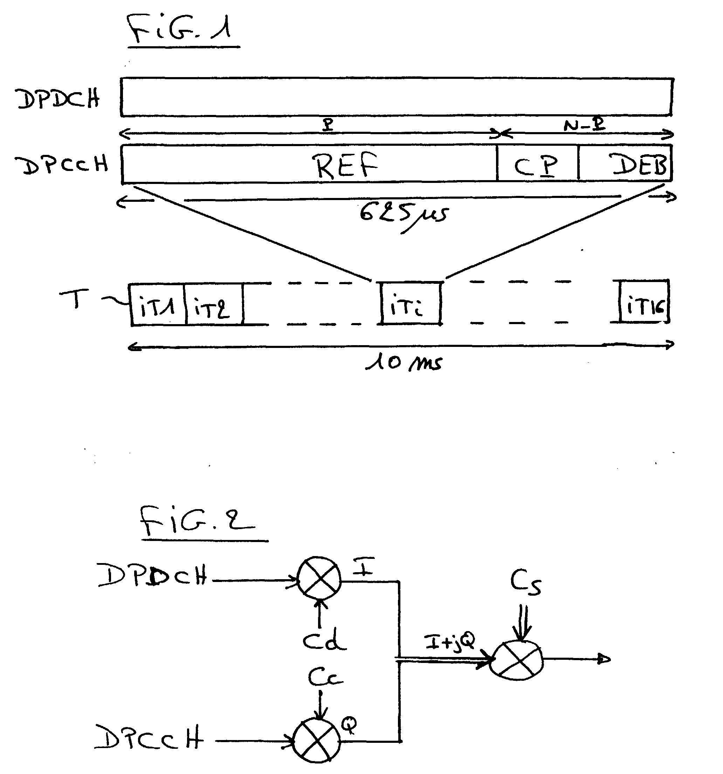

Figure 1 shows the structure of a frame transmitted on an up link. Each frame T is of length 10 ms and is made up of 16 time slots IT, i.e. each time slot IT has a duration of 625 us. The symbols in the DPDCH and the DPCCH are transmitted simultaneously, and for the DPCCH, each time slot IT has N symbols. The first P symbols of each time slot of the DPCCH are constituted by reference symbols REF, e.g. six reference symbols, and the N-P remaining symbols are power control symbols CP and rate symbols DEB. By way of example, two symbols CP and two symbols DEB can be used, giving N=10.

The spread ratios of the DPDCH and the DPCCH can be identical or different, and when they are not equal to each other this gives rise to a different number of symbols being transmitted. By way of example, a time slot ITi of a DPCCH frame can have ten symbols spread using a 256-chip sequence while a time slot of a DPDCH frame can have 20 symbols spread by a 128-chip sequence.

After unspreading, simultaneous transmission of payload data and of reference symbols makes it possible to perform coherent demodulation of the payload data, relying on knowledge about the reference symbols (correlation). The transmission of reference symbols also makes it possible to estimate the symbols CP and DEB.

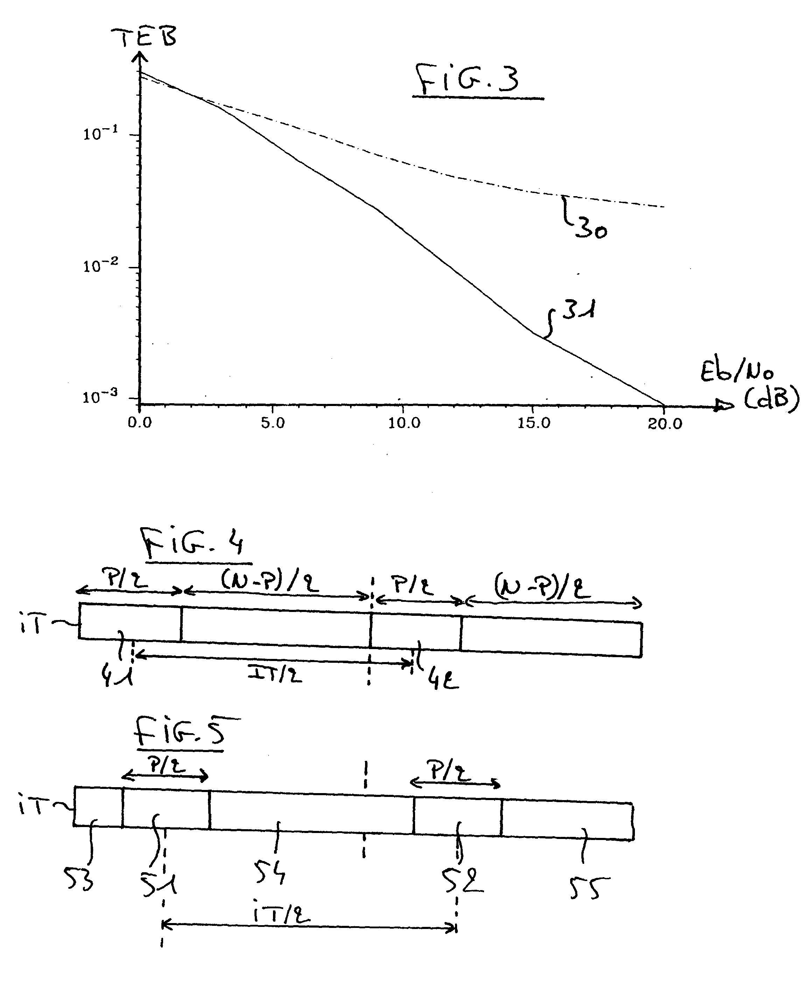

Figure 2 shows an example of the data in the DPDCH and the DPCCH being spread for the up direction.

The data that is to be transmitted in these channels is spread by spreading sequences Cd and Cc. More precisely, the data to be transmitted in the DPDCH is spread by a spreading sequence Cd and the data to be transmitted in the DPCCH is spread by a spreading sequence Cc. The sequences Cc used by different terminals may optionally be identical to one another. After spreading, two channels I and Q are obtained. The sequences Cd and Cc are Hadamard sequences. The complex signal I+jQ is spread by a Kasami sequence Cs (likewise complex) that is specific to each terminal. The Kasami sequences of the various terminals are pseudo-orthogonal to one another. The signal spread by the Kasami sequence is then applied to a modulator (not shown) and transmitted to the fixed station.

The problem posed by a DPCCH structure of the kind shown in Figure 1 is that it does not enable the transmission channel (the air interface) to be estimated well when terminals are moving at high speed, and in particular at a speed greater than 300 km/h.

Figure 3 shows the characteristics of the binary error rate (BER) as a function of the Eb/No ratio (without error-correcting encoding) plotted in dB for N=10, P=6, and a terminal travelling at 500 km/h. The characteristic 30 corresponds to that obtained using a DPCCH having six reference symbols REF placed as shown in Figure 1, i.e. in the same field, one after another. It can be seen that there is little variation in BER as a function of the ratio Eb/No and that the BER remains high.

As an indication, the Doppler band measured on a channel subjected to multiple paths is equal to:

$$B = 2Fc*v/c$$

where Fc is the carrier frequency, $\underline{v}$ is the relative sped of the terminal, and $\underline{c}$ is the speed of light.

For a carrier frequency equal to 2 GHz, and a time slot duration of 625 us, and a sampling frequency of 1.6 kHz, the theoretical maximum travel speed for a terminal is 433 km/h. In practice, performance is observed to fall off rapidly as from 300 km/h, i.e. the BER rapidly becomes too large.

OBJECTS AND SUMMARY OF THE INVENTION

A particular object of the present invention is to remedy those drawbacks.

More precisely, one of the objects of the present invention is to provide a structure for a time slot comprising reference symbols, said time slot being suitable for use in control frames of a CDMA type transmission network in which terminals travel at high speed, and in particular speeds greater than 300 km/h, and in which the structure makes it possible to obtain a better estimate of the transmission channel at such high speeds.

This object, and others that appear below, are achieved by the fact that the P reference symbols occupy two distinct fields.

The distribution of these reference symbols over two distinct fields, e.g. separated by power control symbols CP and by rate control symbols DEB, enables a better estimate of the transmission channel to be made by interpolation (e.g. linear interpolation) between two successive channel estimates, and is particularly useful when the channel is varying rapidly, as happens at high travel speeds.

Advantageously, the two fields have identical numbers of symbols, thereby making it possible not only to perform intra-slot interpolation effectively (i.e. within each time slot), but also to perform inter-slot interpolation effectively (i.e. between successive time slots).

The invention also relates to a frame structure that includes such time slots.

BRIEF DESCRIPTION OF THE DRAWINGS

Other characteristics and advantages of the invention will appear on reading the following description of preferred implementations, given by way of non-limiting illustration, and from the accompanying drawings, in which:

- Figure 1 shows the structure of a frame transmitted over the up link of a W-CDMA network;
- Figure 2 shows an example of how the data contained in the DPDCH and the DPCCH is spread in the up direction;
- Figure 3 shows the BER characteristics as a function of the Eb/No ratio;
- Figure 4 shows the structure of a control time slot ITi of the invention; and
- Figure 5 shows another time slot structure of the invention.

MORE DETAILED DESCRIPTION

Figures 1, 2, and 3 are described above with reference to the state of the art.

Figure 4 shows a structure of a control time slot IT of the invention, e.g. for transmission over the up link of a W-CDMA network.

As in Figure 1, the time slot IT of Figure 4 comprises a number P (e.g. six) of reference symbols and a number N-P (e.g. four) of symbols which are not reference symbols. The invention differs from the state of the art in that the reference symbols occupy exactly two distinct fields 41 and 42. The term "distinct fields" is used to mean fields which are not contiguous.

It has been shown that transmission channel estimation based on reference symbols is much better when the reference symbols appear in two separate fields, a first correlation performed on the first reference symbol field to be received serving to enable a first estimate to be made of the transmission channel, a second correlation performed on the second field of reference symbols to be received enabling a second estimate to be performed of the transmission channel. Interpolation (e.g. linear interpolation) between these two estimates provides an estimate of the transmission channel at any time, which estimate can be used for detecting other symbols of the time slot IT (in particular CP and DEB) and above all for detecting the payload data transmitted during the same time interval over the DPDCH.

The characteristic 31 in Figure 3 shows the performance obtained for a control time slot structure of the kind shown in Figure 4 (two fields of three reference symbols each, i.e. P=6), with N=10 and v=500 km/h (without error-correction encoding and applying linear interpolation between two successive estimates).

It can be seen that the BER decreases much more quickly than in the state of the art as a function of the Eb/No ratio. The reason is that the linear interpolation between the two fields of reference symbols located as shown in Figure 4 (the second field of reference symbols beginning halfway along the time interval) makes it possible to track variation in the high speed transmission channel more closely (i.e. a channel having a large Doppler effect), compared with the solution which consists in placing all of the reference symbols in the same field (Figure 1). The estimation frequency of the channel is doubled.

Returning to Figure 4, the fields 41 and 42 preferably comprise identical numbers P/2 of reference symbols, and the number P of reference symbols is advantageously equal to six. The second reference symbol field 42 in this case begins in the middle of the time slot IT.

In Figure 4, the first of the distinct fields 41 begins at the beginning of the time slot IT, but it would also be possible to have said field preceded by symbols that are not reference symbols, as shown in Figure 5 which shows another time slot structure of the invention. In Figure 5, the first reference symbol field, referenced 51, begins after another field 53, e.g. comprising one or two power control symbols, the second reference symbol field 52 begins after another field 54 and is followed by another field 55. This configuration thus has reference symbol fields that are offset relative to those of Figure 4. Any offset is possible, providing that it does not overflow from the time slot IT. When the middles of the fields 54 an 55 are spaced apart by a distance IT/2, as shown in Figures 4 and 5, up to (N-P)/2 different symbol positions are possible.

In a preferred implementation, N-P is a multiple of four and an offset of (N-P)/4 symbols is used. This makes it possible to obtain a time slot structure that has two reference symbol fields disposed symmetrically about the middle of the time slot (i.e. they are separated by (N-P)/2 symbols) thereby making it possible to optimize the above-mentioned intra-slot interpolation.

When the reference symbol fields are placed in such a manner that the middles of these fields are separated by a distance IT/2, as shown in Figures 4 and 5, the distance between these fields within a time slot is identical to the distance between these fields between two successive time slots. This makes regular estimation of the transmission channel possible on the basis of inter-slot interpolation.

The transmission of reference symbols in two distinct fields also makes it possible to estimate more reliably than in the state of the art the symbols (e.g. CP and DEB) that are contained in the time slot in which the reference symbols are also transmitted.

The invention applies not only to transmitting data in the up direction, but also to transmitting data in the down direction. Similarly, the invention is not applicable to W-CDMA networks only, but to any CDMA transmission network in which time slots including reference symbols are transmitted.

**Claims**

1. A time slot for a control frame used in a CDMA type transmission network, said time slot comprising N symbols including P reference symbols, wherein the P reference symbols occupy exactly two distinct fields.

2. A time slot according to claim 1, wherein said two fields contain identical numbers of symbols.

3. A time slot according to claim 2, wherein the middles of said fields are separated by a distance equal to half a time slot.

4. A time slot according to claim 2, wherein said fields of reference symbols are placed in the middles of each half time slot.

5. A time slot according to claim 2, wherein P is equal to six.

6. A time slot according to claim 1, wherein N is equal to ten.

7. A time slot according to claim 1, wherein the duration of said time slot is equal to 625 µs.

8. A time slot according to claim 1, wherein the first of said distinct time slots begins at the beginning of said time slot.

9. A time slot according to claim 1, wherein the first of said fields is preceded by a field of symbols which are not reference symbols.

10. A control frame used in a CDMA network, the frame including a time slot according to claim 1.

FIG. 1

FIG. 2

FIG.3

FIG.4

FIG.5

**European Patent Office**

# EUROPEAN SEARCH REPORT

Application Number

EP 99 44 0219

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 5 274 670 A (SERIZAWA MUTSUMU ET AL) 28 December 1993 (1993-12-28) | 1,2,8,10 | H04B7/005 H04B7/26 |
| A | * abstract * * column 1, line 48 - line 50 * * column 4, line 3 - line 4 * * column 7, line 43 - line 49 * * figure 7 * | 3 | H04J3/06 |
| Y | WO 98 27677 A (BAIER PAUL WALTER ;KLEIN ANJA (DE); NASSHAN MARKUS (DE); SIEMENS A) 25 June 1998 (1998-06-25) * page 11, line 18 - line 26 * * page 12, line 31 - line 37 * * figure 4 * | 1,2,8,10 | |
| A | WO 94 29985 A (MOTOROLA INC) 22 December 1994 (1994-12-22) * abstract * * figure 2 * | 1,10 | |
| A | US 5 214 671 A (NAKAI TOSHIHISA) 25 May 1993 (1993-05-25) * abstract * * column 1, line 17 - line 23 * * column 2, line 50 - line 53 * * figure 4 * | 1,3,8,10 | TECHNICAL FIELDS SEARCHED (Int.Cl.7) H04B H04J H04L |
| A | US 5 353 307 A (LESTER HOWARD L ET AL) 4 October 1994 (1994-10-04) * column 4, line 25 - line 51 * * claims 10,11 * * figure 4 * | 1,3,8,10 | |

-/--

The present search report has been drawn up for all claims

| Place of search | Date of completion of the search | Examiner |
|---|---|---|
| THE HAGUE | 16 November 1999 | Lustrini, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 99 44 0219

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 790 727 A (ASCOM TECH AG) 20 August 1997 (1997-08-20) * abstract * * page 2, line 32 * * page 4, line 1 - line 3 * * claim 1 * | 1-3,9,10 | |
| | | | **TECHNICAL FIELDS SEARCHED** (Int.Cl.7) |

The present search report has been drawn up for all claims

| Place of search | Date of completion of the search | Examiner |
|---|---|---|
| THE HAGUE | 16 November 1999 | Lustrini, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 99 44 0219

This annex lists the patent family members relating to the patent documents cited in the above–mentioned European search report.
The members are as contained in the European Patent Office EDP file on
The European Patent Office is in no way liable for these particulars which are merely given for the purpose of information.

16-11-1999

| Patent document cited in search report | | Publication date | Patent family member(s) | | Publication date |
|---|---|---|---|---|---|
| US 5274670 | A | 28-12-1993 | JP | 4274611 A | 30-09-1992 |
| WO 9827677 | A | 25-06-1998 | AU | 5980898 A | 15-07-1998 |
| WO 9429985 | A | 22-12-1994 | US | 5297162 A | 22-03-1994 |
| | | | US | 5359624 A | 25-10-1994 |
| | | | US | 5353300 A | 04-10-1994 |
| | | | CA | 2161258 A,C | 22-12-1994 |
| | | | CN | 1125026 A | 19-06-1996 |
| | | | EP | 0701753 A | 20-03-1996 |
| US 5214671 | A | 25-05-1993 | JP | 4259111 A | 14-09-1992 |
| | | | CA | 2058157 A | 14-08-1992 |
| US 5353307 | A | 04-10-1994 | CA | 2076099 A | 04-03-1993 |
| EP 0790727 | A | 20-08-1997 | NONE | | |

EPO FORM P0459

For more details about this annex : see Official Journal of the European Patent Office, No. 12/82